Europäisches Patentamt

European Patent Office

Office européen des brevets

(19)

(11) Numéro de publication : **0 126 917 B1**

(12) # FASCICULE DE BREVET EUROPÉEN

(45) Date de publication du fascicule du brevet :
16.06.87

(21) Numéro de dépôt : **84103907.6**

(22) Date de dépôt : **07.04.84**

(51) Int. Cl.⁴ : **B 65 G 53/46**

(54) **Dispositif d'introduction de quantités dosées de matières pulvérulentes dans un fluide de propulsion pneumatique et application à un réservoir de distribution de matières pulvérulentes.**

(30) Priorité : **28.04.83 LU 84780**

(43) Date de publication de la demande :
**05.12.84 Bulletin 84/49**

(45) Mention de la délivrance du brevet :
**16.06.87 Bulletin 87/25**

(84) Etats contractants désignés :
**AT BE DE FR GB IT NL SE**

(56) Documents cités :
**EP-A- 0 108 319**
**DE-A- 2 412 894**
**DE-C-   187 168**
**DE-U- 7 116 914**
**FR-A- 2 344 472**
**GB-A- 2 086 553**

(73) Titulaire : **PAUL WURTH S.A.**
**32 rue d'Alsace**
**L-1122 Luxembourg (LU)**

(72) Inventeur : **Legille, Edouard**
**166 rue de Trèves**
**Luxembourg (LU)**
Inventeur : **Mailliet, Pierre**
**1 allée Drosbach**
**Howald (LU)**
Inventeur : **Loutsch, Jeannot**
**8 rue du Commerce**
**Itzig (LU)**
Inventeur : **Welter, Jean-Pierre**
**4 rue de l'Hôpital**
**Grevenmacher (LU)**

(74) Mandataire : **Meyers, Ernest et al**
**Office de Brevets Freylinger & Associés 46 rue du**
**Cimetière B.P. 1153**
**L-1011 Luxembourg (LU)**

Jouve, 18, rue St-Denis, 75001 Paris, France

## Description

La présente invention concerne un dispositif d'introduction de quantités dosées de matières pulvérulentes dans un fluide de propulsion pneumatique, constitué d'un doseur comprenant un boîtier pourvu d'une ouverture latérale en communication avec un réservoir de matières pulvérulentes, ce boîtier renfermant deux douilles coaxiales dont celle qui se trouve à l'intérieur est pourvue d'un alésage axial pour le passage du fluide de propulsion et dont l'une, au moins, est mobile autour de son axe longitudinal et est reliée, à cet effet, à un dispositif d'entraînement approprié, chacune des douilles étant pourvue d'une fente au niveau de l'ouverture latérale du boîtier de façon que ces fentes puissent plus ou moins chevaucher ou se masquer mutuellement par rotation de la douille mobile et définir ainsi un passage plus ou moins grand entre le réservoir et l'alésage axial.

Un dispositif de dosage et d'extraction de matières pulvérulentes d'un réservoir de distribution du genre précité est proposé par le document GB-A-2 086 553. Ce doseur a été conçu plus particulièrement pour l'application à l'injection de combustibles solides dans un four à cuve. Dans ce genre d'application, il est prévu un doseur pour chaque porte-vent, ou, tout au plus, pour chaque couple de porte-vent de sorte qu'il est nécessaire d'associer toute une série de doseurs au réservoir de distribution et de stockage intermédiaire de la matière pulvérulente. Par conséquent, pour les besoins d'entretien, notamment de démontage d'un doseur, il faut, soit prévoir une vanne de fermeture entre chaque doseur et le réservoir, soit accepter la nécessité de devoir mettre hors service tout le réservoir et tous les doseurs pour l'entretien d'un seul d'entre eux.

Le but de la présente invention est de prévoir un dispositif de dosage perfectionné du genre précité, qui permette leur démontage individuel sans la nécessité d'avoir recours à une vanne d'arrêt. Un but accessoire de l'invention est l'application directe, notamment le montage de tels doseurs, sur un réservoir de distribution de matières pulvérulentes.

Pour atteindre cet objectif, le dispositif proposé par l'invention est du genre précité et caractérisé par les caractéristiques précisées dans la deuxième partie de la revendication 1.

Ledit mécanisme de commande peut être constitué simplement par une manette solidaire de ladite troisième douille.

Dans un mode de réalisation avantageux, il est prévu des moyens pour bloquer ladite manette et la douille dans une première position angulaire dans laquelle l'ouverture de la douille et celle du boîtier sont superposées et dans une seconde position angulaire décalée de 180° de ladite première position angulaire.

En vue de l'entretien du doseur, le boîtier et la troisième douille, d'une part, et le reste du doseur avec les deux premières douilles, d'autre part, sont séparables en bloc par translation axiale.

Par conséquent, la troisième douille fait fonction de vanne et permet, dans le cas de l'association de plusieurs doseurs à un distributeur, de démonter chaque doseur individuellement, sans devoir mettre les autres hors service.

Cette conception permet, en outre, de prévoir des moyens de sécurité ne permettant le démontage du doseur que lorsque ladite manette occupe ladite seconde position angulaire, correspondant à l'isolation du doseur du réservoir.

Cette conception est réalisable grâce au fait qu'il n'est plus nécessaire de prévoir des vannes intermédiaires d'arrêt entre les doseurs et le réservoir et procure l'avantage d'une construction plus compacte, moins encombrante et plus facile à entretenir.

Chaque doseur est avantageusement incliné par rapport à la paroi latérale du réservoir de distribution de telle manière que son axe longitudinal soit sensiblement perpendiculaire à la surface conique engendrée par la bissectrice de l'angle entre la paroi latérale et le fond du réservoir.

D'autres particularités et caractéristiques ressortiront de la description détaillée d'un mode de réalisation préféré, présenté ci-dessous à titre d'illustration, en référence aux dessins annexés, dans lesquels :

la figure 1 présente schématiquement une coupe axiale à travers un dispositif selon la présente invention ;

la figure 1a représente schématiquement une vue du dispositif suivant la flèche A de la figure 1 ;

les figures 2 et 2a représentent respectivement des vues correspondant à celles des figures 1 et 1a, mais représentant le doseur en position fermée et en condition de démontage ;

les figures 3 et 3a représentent respectivement des vues correspondant à celles des figures 1 et 1a, mais avec le corps du dispositif démonté et

la figure 4 représente schématiquement un réservoir de distribution équipé de doseurs selon la présente invention.

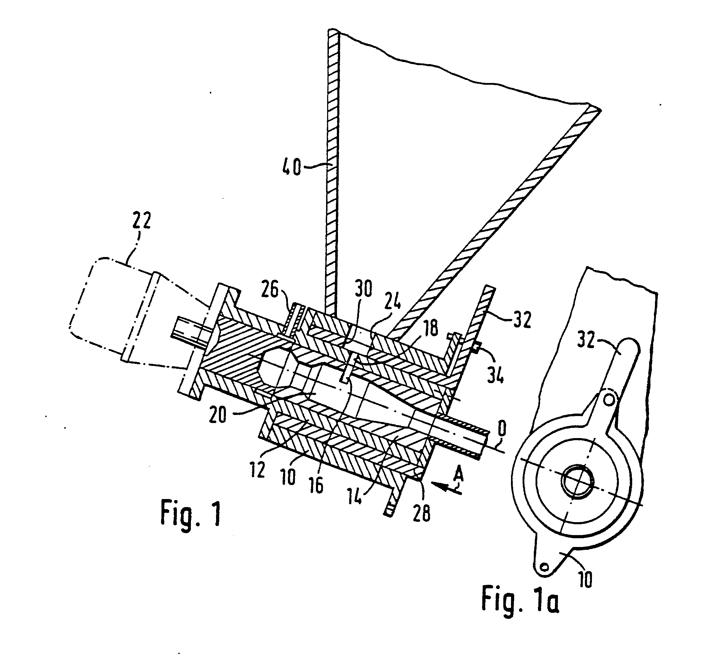

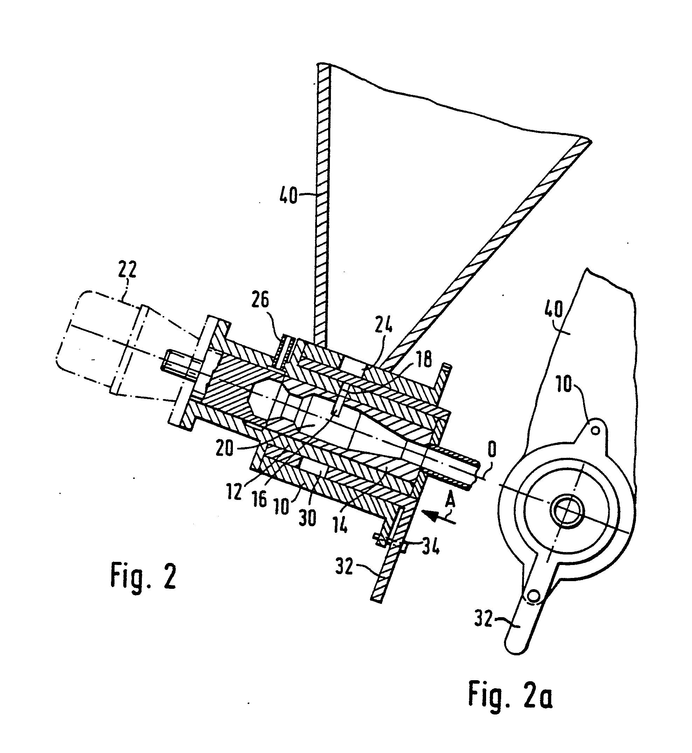

Le dispositif de dosage et d'introduction de quantités dosées de matières pulvérulentes dans un fluide de propulsion pneumatique, représenté sur les figures 1 et 2 est analogue à celui proposé par la demande de brevet luxembourgeois no. 84 462. Ce dispositif comporte notamment un boîtier cylindrique 10 à l'intérieur duquel se trouvent deux douilles coaxiales 12 et 14. Dans le mode de réalisation représenté, la douille extérieure 12 est fixe et solidaire du boîtier 10, tandis que la douille intérieure 14 peut tourner autour de l'axe longitudinal 0.

Les deux douilles 12 et 14 comportent chacune une fente 16, respectivement 18 qui, par la rotation de la douille mobile 14, peuvent être superposées pour permettre un passage maximal de la matière pulvérulente dans la chambre 20 prévue à l'intérieur de la douille mobile 14, ou se masquer mutuellement en partie ou totalement pour réduire ou couper le passage de matières pulvérulentes en direction de la chambre 20. La rotation de la douille mobile 14 est assurée au moyen d'un dispositif connu en soi, représenté en traits interrompus 22 et décrit plus en détail dans la demande de brevet précitée.

Le boîtier 10 comporte une ouverture latérale 24 pour l'admission de la matière pulvérulente à travers les fentes 16 et 18 dans la chambre intérieure 20, dans lesquelles s'effectue le mélange avec l'air sous pression admis à travers une tubulure 26.

La différence entre le dispositif proposé par la présente invention et la demande de brevet précitée réside dans la présence d'une douille cylindrique intermédiaire 28 prévue entre le boîtier 10 et la douille fixe 12. Cette douille intermédiaire 28 est également mobile autour de l'axe 0 et est, en outre, pourvue d'une ouverture latérale 30 correspondant exactement à l'ouverture 24 dans le boîtier 10. Cette douille 28 a la fonction d'une vanne dans la mesure où en superposition des deux ouvertures 24 et 30, la vanne est ouverte et permet le passage de la matière pulvérulente à travers les fentes 16 et 18 (voir figure 1), tandis qu'après rotation de la douille, notamment de 180° comme représenté sur la figure 2, le passage de la matière pulvérulente vers l'intérieur de la chambre 20 est interrompu.

La rotation de la douille 28, c'est-à-dire la manœuvre de ce qui peut être appelé une vanne, peut être effectuée manuellement par une simple manette 32 solidaire de la douille 28. Les références 34 symbolisent des verrous destinés à verrouiller la vanne soit dans la position ouverte de la figure 1, soit dans la position fermée de la figure 2.

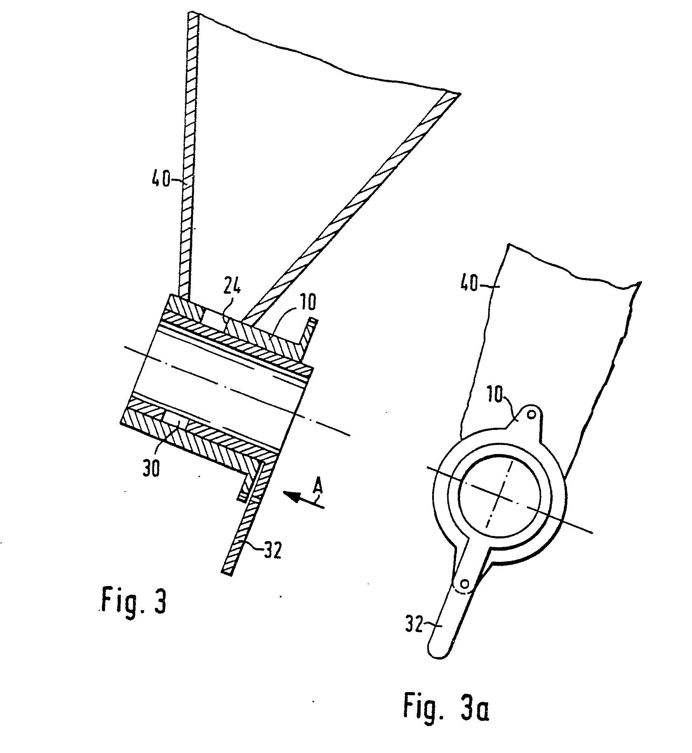

Selon l'une des caractéristiques de la présente invention, le corps du dispositif, formé par les deux douilles intérieures 12 et 14 et par le mécanisme 22 d'entraînement de la douille mobile 14, est séparable en bloc, par translation axiale, du reste formé par le boîtier 10 et la douille intermédiaire 28. La figure 3 montre le boîtier 10 et la douille 28 après extraction du corps du dispositif.

Etant donné que le but de la douille 28 est l'isolation du réservoir de matières pulvérulentes en vue du démontage du corps de la vanne, il est possible de prévoir des moyens de sécurité qui ne permettent l'extraction du corps du dispositif que dans la position fermée de la douille 28 et de la manette 32 comme illustré sur la figure 3. Un tel dispositif peut être constitué simplement par une connection à baïonnette comprenant, par exemple, un jeu de rainures phériphériques de la douille 12 avec un ergot intérieur de la douille 28, ou vice versa.

Etant donné que la douille 28 permet la suppression d'une vanne entre le doseur et le réservoir de distribution, le boîtier 10 peut être monté directement sur le réservoir de distribution représenté schématiquement par la référence 40 sur les figures 1 à 3.

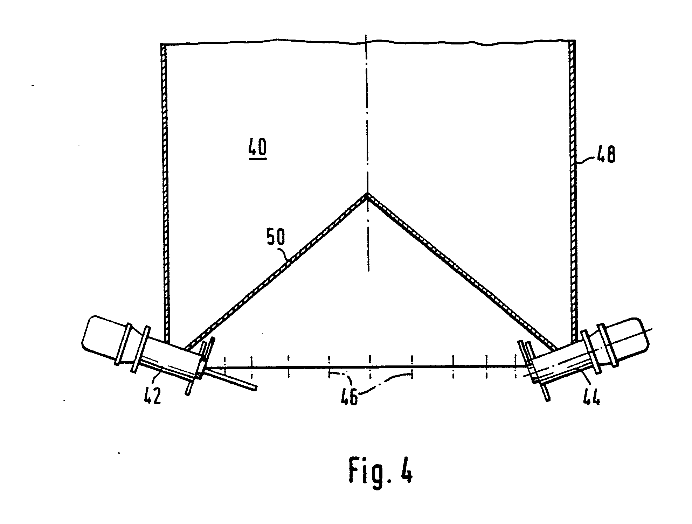

La figure 4 représente schématiquement l'intégration de doseurs tels que décrits ci-dessus à un réservoir de distribution de la matière pulvérulente, notamment de la poudre de charbon. Le réservoir 40, avec une paroi latérale 48, de préférence sensiblement cylindrique, comporte un fond 50, de forme conique dont la pointe pénètre vers l'intérieur du réservoir 40. Cette figure 4 montre également deux doseurs 42 et 44, incorporés directement au réservoir 40 par montage à l'intersection de la paroi latérale 48 et du fond 50. Ce montage peut être effectué par soudage du boîtier 10 au fond 50 et à la paroi 48. La référence 46 symbolise schématiquement d'autres doseurs répartis régulièrement à la base du réservoir 40.

Les doseurs 42, 44, 46 sont de préférence inclinés par rapport au réservoir 40 de telle manière que leur axe longitudinal soit sensiblement perpendiculaire à une surface conique virtuelle engendrée par la bissectrice de l'angle formé entre la paroi latérale 48 et le fond conique 50 du réservoir.

**Revendications**

1. Dispositif d'introduction de quantités dosées de matières pulvérulentes dans un fluide de propulsion pneumatique constitué d'un doseur (42) comprenant un boîtier (10) pourvu d'une ouverture latérale (24) en communication avec un réservoir (40) de matières pulvérulentes, ce boîtier (10) renfermant deux douilles coaxiales (12, 14) dont celle qui se trouve à l'intérieur est pourvue d'un alésage axial (20) pour le passage du fluide de propulsion et dont l'une, au moins, est mobile autour de son axe longitudinal et est reliée, à cet effet, à un dispositif d'entraînement approprié (22), chacune des douilles (12, 14) étant pourvue d'une fente (16, 18) au niveau de l'ouverture latérale (24) du boîtier (10) de façon que ces fentes (16, 18) puissent plus ou moins chevaucher ou se masquer mutuellement par rotation de la douille mobile et définir ainsi un passage plus ou moins grand entre le réservoir et l'alésage axial (20), caractérisé en ce que le dispositif comporte une pluralité de tels doseurs chacun en communication avec le réservoir ; en ce que le fond (50) du réservoir (40) possède une forme conique dont la pointe pénètre à l'intérieur du réservoir (40) ; en ce que lesdits doseurs (42, 44, 46) sont intégrés au réservoir (40) à l'intersection de la paroi latérale (48) et du fond conique (50) ; en ce que chaque doseur comporte une troisième douille coaxiale mobile (28), disposée entre le boîtier (10) et les deux douilles coaxiales (12, 14), cette troisième douille (28) étant pourvue d'une ouverture latérale (30) correspondant à ladite ouverture latérale (24) du boîtier (10) ; en ce qu'il est prévu un mécanisme de commande pour faire tourner cette troisième douille (28) autour de son axe longitudinal, entre une première position angulaire dans laquelle l'ouverture latérale de la troisième douille et celle du boîtier sont superposées et une seconde position angulaire décalée dans laquelle la troisième douille bloque l'ouverture latérale du boîtier ; et en ce que dans la seconde position angulaire de la troisième douille, les deux douilles intérieures (12, 14) et leur dispositif d'entraînement (22) sont séparables en bloc par translation axiale du reste du doseur.

2. Dispositif selon la revendication 1, caractérisé en ce que chaque doseur est incliné par rapport à la paroi latérale (48) du réservoir de distribution (40) de telle manière que son axe longitudinal soit sensiblement perpendiculaire à la surface conique engendrée par la bissectrice de l'angle entre la paroi latérale (48) et le fond du réservoir (50).

3. Dispositif selon la revendication 1, caractérisé en ce que ledit mécanisme de commande est constitué par une manette (32) solidaire de ladite troisième douille (28).

4. Dispositif selon la revendication 3, caractérisé par des moyens (34) pour bloquer ladite manette (32) et la douille (28) dans une première position angulaire dans laquelle l'ouverture (30) de la douille (28) et celle (24) du boîtier (10) sont superposées et dans une seconde position angulaire décalée de 180° de ladite première position angulaire.

5. Dispositif selon la revendication 4, caractérisé par des moyens de sécurité ne permettant le démontage de chaque doseur que lorsque ladite manette (32) occupe ladite seconde position angulaire, correspondant à l'isolation du doseur du réservoir.

**Claims**

1. Device for introducing dosed quantities of pulverulent substances into a pneumatic propulsion fluid consisting in a proportioning device comprising a box (10) provided with a side aperture (24) communicating with a tank (40) for pulverulent substances, this box (10) containing two coaxial sockets (12, 14) of which the one situated inside is provided with an axial boring (20) to give passage to the propulsion fluid while at least one is movable about its longitudinal axis and is connected for this purpose to a suitable driving device (22), each of the sockets (12, 14) being provided with a slit (16, 18) facing the side aperture (24) of the box (10) so that these slits (16, 18) can be caused to overlap to a greater or smaller extent or « mask » each other by rotating the movable socket, thus defining a smaller or larger passage, as the case may be, between the tank and the axial boring (20) characterized in that the device comprises a plurality of said proportioning devices each communicating with the tank ; in that the base (50) of the tank (40) has a conical shape of which the top extends into the interior of the tank (40), in that the said proportioning devices (42, 44, 46) are integrated with the tank (40) at the intersection between the side wall (48) and the conical base (50) ; in that each proportioning device comprises a third movable coaxial socket (28) positioned between the box (10) and the two coaxial sockets (12, 14), the said third socket (28) being provided with a side aperture (30) corresponding to the said side aperture (24) of the box (10) in that there is provided a driving mechanism serving to cause the said third socket (28) to rotate about its longitudinal axis between a first angular position in which the side aperture of the third socket and the side aperture of the box are superposed and a second angular position different from the first in which the third socket obstructs the side aperture of the box, and in that in the second angular position of the third socket the two interior sockets (12, 14) and their driving device (22) can be separated as a whole by translatory movement in the axial direction from the remainder of the proportioning device.

2. Device in accordance with claim 1, wherein each proportioning device is inclined in relation to the side wall (48) of the distribution tank (40) in such a way that its longitudinal axis is approximately perpendicular to the conical surface generated by the bisector of the angle between the side wall (48) and the base of the tank (50).

3. Device in accordance with claim 1, wherein the said driving mechanism consists of a handle (32) integral with the said third socket (28).

4. Device in accordance with claim 3, comprising means (34) for locking the said handle (32) and socket (28) in a first angular position in which the aperture (30) of the socket (28) and the aperture (24) of the box (10) are superposed and in a second angular position 180° away from the first angular position.

5. Device in accordance with claim 4, comprising safety devices which prevent the proportioning device from being dismantled unless the said handle (32) occupies the said second angular position in which the device is isolated from the tank.

**Patentansprüche**

1. Vorrichtung zum Einleiten dosierter Mengen von pulverförmigen Stoffen in ein pneumatisches Fluid, bestehend aus einemein Gehäuse 10 umfassenden Dosierer (42), wobei dieses Gehäuse (10) eine seitliche, mit einem Behälter (40) für pulverförmige Stoffe in Verbindung stehende Öffnung (24) aufweist sowie innen zwei koaxiale Hülsen (12, 14), wovon die Innere mit einer axialen Bohrung (20) für den Durchtritt des Transportfluids versehen ist, und wovon mindestens eine um ihre Längsachse drehbar und zu diesem Zweck mit einer geeigneten Betätigungsvorrichtung verbunden ist, wobei jede dieser Hülsen (12, 14) im Bereich der seitlichen Öffnung (24) des Gehäuses (10) so mit einem Spalt (16, 18) versehen ist, dass bei einer Drehung der drehbaren Hülse diese Spalte in mehr oder weniger grossem Masse übereinanderliegen, beziehungsweise sich gegenseitig verdecken und damit eine mehr oder weniger grosse Durchlassöffnung zwischen dem Behälter (40) und der axialen Bohrung (20) definieren, dadurch gekennzeichnet, dass die Vorrichtung eine Mehrzahl solcher, alle mit dem Behälter (40) in Verbindung stehender Dosierer umfasst, dass der Boden (50) des Behälters (40) eine konische Gestalt hat, deren Spitze in das Innere des Behälters (40) hineinragt, dass die genannten Dosierer (42, 44, 46) an der Schnittlinie der Seitenwand (48) mit dem konischen Boden (50) angebracht sind, dass jeder Dosierer eine dritte, koaxiale drehbare und zwischen dem Gehäuse (10) und den beiden koaxialen Hülsen (12, 14) vorgesehene Hülse (28) aufweist, wobei diese letztere mit einer seitlichen, der genannten seitlichen Öffnung (24) des Gehäuses (10) entsprechenden Öffnung (30) versehen ist, dass ein Betätigungsmechanismus vorgesehen ist, um diese dritte Hülse (28) zwischen einer ersten Winkelstellung, in welcher die seitliche Öffnung der dritten Hülse und diejenige des Gehäuses übereinander liegen, und einer zweiten, versetzten Winkelstellung, in welcher die dritte Hülse die seitliche Öffnung des Gehäuses absperrt, um ihre Längsachse zu drehen, und dass in der zweiten Winkelstellung der dritten Hülse die beiden inneren Hülsen (12, 14) und ihre Betätigungsvorrichtung durch axiale Translation als Ganzes vom Rest des Dosierers getrennt werden können.

2. Vorrichtung nach Anspruch 1, dadurch gekennzeichnet, dass jeder Dosierer so in bezug zur Seitenwand (48) des Austeilsbehälters (40) geneigt ist, dass seine Längsachse im wesentlichen senkrecht steht zur kegeligen Fläche, welche von der Winkelhalbierenden des Winkels zwischen der Seitenwand (48) und dem Behälterboden (50) erzeugt wird.

3. Vorrichtung nach Anspruch 1, dadurch gekennzeichnet, dass der genannte Betätigungsmechanismus aus einem Handgriff (32) besteht, welcher mit der genannten dritten Hülse (21) einstückig ist.

4. Vorrichtung nach Anspruch 3, gekennzeichnet durch Mittel (34) zum Blockieren des genannten Handgriffs (32) und der Hülse (28) in einer ersten Winkelstellung, in welcher die Öffnung (30) der Hülse (28) und diejenige (24) des Gehäuses (10) übereinander liegen, sowie in einer zweiten, um 180° gegenüber der genannten ersten Winkelstellung versetzten Winkelstellung.

5. Vorrichtung nach Anspruch 4, gekennzeichnet durch Sicherheitsmittel, welche die Demontage eines jeden Dosierers nur dann zulassen, wenn der genannte Handgriff (32) die genannte zweite, der Isolation des Dosierers vom Behälter entsprechenden Winkelstellung einnimmt.

Fig. 1

Fig. 1a

Fig. 2

Fig. 2a

2

Fig. 3

Fig. 3a

Fig. 4